(19) **Europäisches Patentamt**

**European Patent Office**

**Office européen des brevets**

(11) **EP 1 373 692 B1**

(12) **EUROPÄISCHE PATENTSCHRIFT**

(45) Veröffentlichungstag und Bekanntmachung des Hinweises auf die Patenterteilung:
**26.10.2005 Patentblatt 2005/43**

(51) Int Cl.⁷: **F01N 3/28**, B32B 3/28, B21D 13/00, B01D 53/94

(21) Anmeldenummer: 02759779.8

(22) Anmeldetag: **28.03.2002**

(86) Internationale Anmeldenummer:
**PCT/EP2002/003481**

(87) Internationale Veröffentlichungsnummer:
**WO 2002/081879 (17.10.2002 Gazette 2002/42)**

(54) **VERFAHREN ZUR HERSTELLUNG EINER EINSTÜCKIGEN, STRUKTURIERTEN BLECHFOLIE MIT EINEM LOCH, BLECHFOLIE UND WABENKÖRPER**

METHOD FOR PRODUCING A ONE-PIECE, STRUCTURED METAL SHEET COMPRISING A CAVITY, METAL SHEET AND HONEYCOMB BODY

PROCEDE POUR PRODUIRE UNE TOLE MINCE STRUCTUREE MONOBLOC PRESENTANT UN TROU, TOLE MINCE ET CORPS EN NID D'ABEILLES

(84) Benannte Vertragsstaaten:
**DE FR IT**

(30) Priorität: **06.04.2001 DE 10117086**

(43) Veröffentlichungstag der Anmeldung:
**02.01.2004 Patentblatt 2004/01**

(73) Patentinhaber: **Emitec Gesellschaft für Emissionstechnologie mbH**
**53797 Lohmar (DE)**

(72) Erfinder:
• **BRÜCK, Rolf**
**51429 Bergisch Gladbach (DE)**
• **ZIMMERMANN, Jörg**
**53902 Bad Münstereifel (DE)**

(74) Vertreter: **Kahlhöfer, Hermann**
**Patentanwälte**
**Kahlhöfer Neumann**
**Herzog Fiesser**
**Karlstrasse 76**
**40210 Düsseldorf (DE)**

(56) Entgegenhaltungen:
**WO-A-96/09892**          **WO-A-96/09893**
**DE-A- 4 029 749**        **DE-A- 19 724 263**
**DE-U- 9 315 010**

**Beschreibung**

Die Erfindung betrifft ein Verfahren zur Herstellung einer einstückigen, strukturierten Blechfolie mit einem Loch im Inneren, welche eine vorgebare gekrümmte Außenkontur und eine das Loch begrenzende Innenkontur aufweist sowie eine solche Blechfolie selbst. Weiterhin betrifft die vorliegende Erfindung einen Wabenkörper, insbesondere zur Reinigung eines Abgases einer Verbrennungskraftmaschine, der einen Zentralkanal mit einer Anströmachse und eine Vielzahl von Blechfolieu umfasst die zumindest teilweise strukturiert sind und für ein Abgas durchströmbare Kanäle aufweist.

Ein solcher Wabenkörper geht beispielsweise aus der Patentschrift EP 0783370 hervor. Dort ist ein Wabenkörper zu katalytischen Umsetzung von Abgasen in einem Abgassystem einer Verbrennungskraftmaschine beschrieben, der eine Vielzahl von Kanälen ausweist, wobei jeder Kanal an seinem einen Ende in einen Zentralkanal mündet. Die Kanäle verlaufen bogenförmig von dem Zentralkanal nach außen und sind durch aneinanderliegende Scheiben begrenzt. Dabei weist wenigstens ein Teil der Scheiben eine Makrostruktur auf, welche die seitliche Begrenzung der Kanäle bilden. Die bogenförmige Ausgestaltung der Kanäle hat zur Folge, dass das den Wabenkörper durchströmeride Abgas sehr stark umgelenkt wird, wobei ein unerwünschter Druckabfall entstehen kann.

Ein ähnlicher Trägerkörper für Abgas-Katalysatoren geht aus dem deutschen Gebrauchsmuster 93 15 010 hervor. Dort wird vorgeschlagen, zwei wellblechartig geprägte Bleche so aufeinander zu legen, dass die Prägungen einen Winkel zueinander einschließen. Beim Durchströmen des Abgases wird so eine turbulente Strömung bewirkt, die eine katalytische Reaktion begünstigt. Die wellblechartig geprägten Bleche sind in einer Ausführungsvariante kreisringförmig mit einer zentralen Öffnung ausgebildet. Die Prägungen verlaufen bogenförmig, tangential, oder konzentrisch.

Zur Vermeidung eines derartigen Druckabfalls ist es demnach erstrebenswert, im wesentlichen gerade und radial vom Zentralkanal auswärtsgehende Kanäle zu bilden. So ist beispielweise aus der nachveröffentlichten DE 10056279 A1 bekannt, scheibenförmige Blechfolien mit einem Loch in der Mitte und radial auswärts gerichtete Kanäle herzustellen, in dem mehrere, kuchenstückähnliche Segmente zu einer derartigen scheibenförmigen Blechfolie zusammengesetzt werden. Die Unterteilung der Blechfolie in mehrere Segmente bringt insbesondere im Hinblick auf die Fertigung eines solchen Wabenkörpers einige Probleme mit sich, da die einzelnen Segmente zueinander ausgerichtet werden müssen. Dies hat zur Folge, dass der Wabenkörper nur mit großem technischen Aufwand in Großserie herstellbar ist.

Trotz dieser bekannten strömungstechnischen Probleme, war es bislang nicht gelungen, eine einstückige und nahtlose Blechfolie herzustellen, die eine Struktur amweist, welche dazu geeignet ist, im wesentlichen gerade und radial auswärts verlaufende Kanäle zu bilden.

Ein radial durchströmbarer katalytischer Konverter geht auch aus der US 5,809,776 hervor. Dieser Konverter weist eine Mehrzahl von scheibenförmigen Elementen mit Erhebungen und Senken auf, so dass im wesentlichen in Richtung hin zur Außenkontur verlaufende Kanäle gebildet sind. Solche scheibenförmigen Elemente wurden üblicherweise mit einem gekrümmten Blechstreifen hergestellt, der nach der Ausbildung der welligen Oberflächenstruktur an den Enden gefügt wurden. Dieser Fügeprozess führt vielfach zu einer Schwächung des scheibenförmigen Bauteils, so dass dieses infolge der hohen thermischen und dynamischen Belastungen im Einsatz versagte.

Hiervon ausgehend ist es Aufgabe der vorliegenden Erfindung, ein Verfahren zur Herstellung einer Blechfolie mit einem Loch im Inneren sowie einer Struktur mit im wesentlichen radial verlaufenden Ausprägungen anzugeben. Eine weitere Aufgabe besteht darin, eine Blechfolie anzugeben, die insbesondere die Fertigung von radial durchströmbaren Wabenkörpern vereinfacht. Außerdern soll ein Wabenkörper angegeben werden, der preiswert herstellbar ist und sich durch einen besonders niedrigen Druckabfall eines ihn durchströmenden Gasstromes auszeichnet.

Diese Aufgaben werden gelöst durch ein Verfahren mit den Merkmalen des Anspruchs 1, einer Blechfolie mit den Merkmalen des Anspruchs 9 sowie einem Wabenkörper mit den Merkmalen des Anspruchs 16. Weitere vorteilhafte Ausgestaltungen werden in den jeweils abhängigen Ansprüchen beschrieben.

Zur Herstellung einer einstückigen, strukturierten Blechfolie mit einem Loch im Inneren, welche eine vorgebbare gekrümmte Außenkontur und eine das Loch begrenzende Innenkontur aufweist, wird erfindungsgemäß vorgeschlagen, zunächst einen einstückigen, ringförmigen, glatten Rohling herzustellen, dessen Außenkante im wesentlichen konzentrisch außerhalb zu der vorgebbaren, zu erzeugenden AuBenkontur und dessen Innenkante im wesentlichen konzentrisch außerhalb zu der vorgebbaren, zu erzeugenden Innenkontur angeordnet ist Anschließend wird eine Struktur in die Blechfolie geprägt, die im wesentlichen radial verlaufende Ausprägungen aufweist, wobei die Blechfolie in einem inneren Randbereich und in einem äußeren Randbereich mit einem etwa einheitlichen Umformgrad bearbeitet wird.

Der Umformgrad bezieht sich dabei auf ein. Verhältnis der Abmessungen eines imaginären Teilbereichs der Blechfolie vor und nach der erfolgten Umformung. Der Umformgmd kann beispielsweise dadurch bestimmt werden, dass auf den Rohling ein Messraster bzw. Rechtecke und/oder Kreise aufweisende Einheitsfiguren aufgebracht werden, wobei diese jeweils eine vorgebbare Länge, Breite oder Radius aufweisen. Nach dem Umformprozess der Blechfolie lassen sich die Verformungen der Blechfolie anhand der Verzerrung der aufgebrachten Messraster bzw. Figuren ablesen. Handelt es sich um Kreise mit einem Durchmesser $d_0$, so stellen die ursprünglichen Kreise nach der Verformung beispielsweise eine Ellipse mit einem Minimaldurchmesser $b_1$ und einem Maximaldurchmesser $l_1$ dar. Die Umformgrade können dann zunächst in zwei Richtungen (z.B. radial und in Umfangsrichtung) gemessen werden, wobei sich ein erster Umformgrad $\varphi_1$ $(=\ln \frac{l_1}{d_0})$ und ein zweiter Umformgrad $\varphi_2$ $(= \ln \frac{b_1}{d_0})$ ablesen lässt. Da sich der Umformgrad in Foliendickenrichtung nicht mit dem Messrasterverfahren ermitteln lässt, wird er über die Volumenkonstanz $(\varphi_1 + \varphi_2 + \varphi_3 = 0)$ bestimmt.

Während des Prägeprozesses des glatten Rohlings zur Herstellung der Struktur tritt üblicherweise plastisches Fließen im Werkstoff auf, das seinen Ursprung in den durch die Umformung hervorgerufenen, unterschiedlichen Spannungszuständen hat. Das plastische Fließen von Werkstoff ist jedoch nur möglich, wenn der verwendete Rohling eine hohe Bruchdehnung aufweist oder dicker ausgeführte und/oder nur gering zu verformende Teilabschnitte aufweist welche als "Materialvorrat" dienen. Die Blechfolien, die insbesondere zur Herstellung eines Katalysator-Trägerkörpers für ein Abgassystem einer Verbrennungskraftmaschine eingesetzt werden, weisen jedoch Foliendicken kleiner 0,065 mm, insbesondere kleiner 0,03 mm, und einem relativ hohen Aluminiumgehalt auf. Das bedeutet, dass die verwendete Blechfolie weder eine hohe Bruchdehnung (aufgrund des Aluminiumgehalts) noch "Materialvorräte" (aufgrund der geringen Foliendicke) hat. Das vorgeschlagene Herstellungsverfahren mit einem etwa einheitlichen Umformgrad in einem inneren Randbereich und einem äußeren Randbereich der Blechfolie verhindert im wesentlichen das Fließen von Material. Zumindest treten keine so großen Materialflüsse auf, dass die Foliendicke deutlich reduziert oder sogar ein Riss in der Blechfolie erzeugt wird.

Gemäß einer weiteren Ausgestaltung des Verfahrens wird vorgeschlagen, dass die Struktur so geprägt wird, dass ein Abstand von der Innenkante zur Außenkante des Rohlings etwa dem Abstand der Außenkontur zur Innenkontur der Blechfolie entspricht. Die geprägte Struktur ist zumeist regelmäßiger Natur. Das hat zur Folge, dass sich die Abmaße der Innenkante und der Außenkante des Rohlings während des Umformprozesses im wesentlichen um den gleichen Faktor reduzieren. Um möglichst einheitliche Umformgrade in einem inneren und einem äußeren Bereich der Blechfolie zu erhalten ist es dabei vorteilhaft, den Abstand der Innen- und Außenkante des Rohlings auch während und nach dem Umformprozess in etwa konstant zu halten. Auf diese Weise wird im wesentlichen das radiale Fließen von Material reduziert.

Dabei ist es besonders vorteilhaft, eine wellenförmige Struktur zu generieren, die eine vorgebbare Wellhöhe und eine vorgebbare Wellenlänge aufweist. Diese wellenförmige Struktur ist sehr regelmäßig aufgebaut und vermeidet sehr starke Biegebeanspruchungen bzw. Knickbeanspruchungen des Rohlings. Auch dadurch kann ein besonders einheitlicher Umformgrad erzielt werden.

Im Hinblick auf die oben beschriebene wellenförmige Struktur ist es vorteilhaft, die Struktur im inneren und im äußeren Randbereich mit einer etwa gleich großen Wellenhöhe auszuführen, wobei die Wellenlänge im inneren Randbereich kleiner ist als im äußeren. Mit Wellenlänge ist dabei der Abstand zweier benachbarter Ausprägungen der Struktur in einer Richtung senkrecht zur Ebene des Rohlings gemeint. Die Wellenhöhe bezieht sich auf den Abstand zweier direkt benachbarter, entgegengesetzter Extrema der Ausprägung. Der Ausgleich der Umformgrade im inneren bzw. im äußeren Randbereich erfolgt hierbei über die Variation bzw. Anpassung der Wellenlänge.

Gemäß einer weiteren Ausgestaltung des Verfahrens sind die Innenkontur und Außenkontur sowie die Innenkante und die Außenkante rund und konzentrisch zueinander ausgeführt. Diese sehr regelmäßige Ausgestaltung der Kanten bzw. Konturen verhindert eine unregelmäßige Beanspruchung (z.B. Kerbwirkung) des Materials während des Umformprozesses.

Weiterhin wird vorgeschlagen, die Struktur mit Hilfe eines Mehrstufenwerkzeuges, insbesondere mit einem mehrstufigen Wellwerkzeug, zu erzeugen, wobei jeweils nur eine teilweise Herstellung der Struktur erfolgt. Das bedeutet, dass der letztendlich herzustellende Umformgrad in mehreren Schritten erzeugt wird. Dies lässt sich beispielsweise dadurch bewerkstelligen, dass zunächst Wellwerkzeuge eingesetzt werden, die eine Struktur mit relativ flachen Ausprägungen aufweisen. In einem nächsten Schritt wird demnach ein Wellwerkzeug verwendet, welches eine etwas stärker ausgeprägte Struktur aufweist, während ein abschließender dritter Wellvorgang die letztendlich gewünschte Wellhöhe bzw. Welllänge generiert.

Gemäß nach einer weiteren Ausgestaltung des Verfahrens sind ein erster Umfang der Innenkante sowie ein zweiter Umfang der Außenkante des Rohlings jeweils um einen Verkürzungsfaktor größer als ein dritter Umfang der Innenkontur und ein vierter Umfang der Außenkontur ausgeführt, wobei der Verkürzungsfaktor in Abhängigkeit der herzustellenden Struktur ausgewählt wird. Der Verkürzungsfaktor bezogen auf die Außenkante bzw. -kontur ist dabei verschieden zu dem Verkürzungsfaktor bezüglich der Innenkante bzw. -kontur ausgeführt. Im Hinblick auf eine wellenförmige Struktur beträgt der Verkürzungsfaktor vorteilhafterweise 1,1 bis 1,6, insbesondere 1,25 bis 1,45. Diese Verkürzungsfaktoren haben sich als besonders geeignet erwiesen, eine gleichmäßige Umformung der Blechfolie im inneren Randbereich und im äußeren Randbereich zu gewährleisten.

Zur besseren Anschaulichkeit soll nun anhand eines Beispiels die Bedeutung des Verkürzungsfaktors erläutert werden. Der Rohling hat demnach einen ersten, das Loch begrenzenden Umfang von 60 mm und einen zweiten Umfang von 100 mm und bildet demnach eine ringförmige Scheibe. Bei einem gleichen Verkürzungsfaktor bezogen auf die Innen- und Außenkante bzw. -kontur von 1,4 weist die fertige Blechfolie innen einen dritten Umfang von etwa 42,86 mm und einen äußeren vierten Umfang von etwa 71,43 mm auf. Das bedeutet allerdings, dass der Abstand des Rohlings in diesem Beispiel ca. 12,73 mm beträgt, wobei bei einem ausschließlichen "Schrumpfen" des Rohlings, der Abstand der Blechfolie ca. 9,1 mm betragen würde. Dies hätte demnach ein verstärktes Fließen von Material zur Folge, was hier jedoch mit unterschiedlichen Verkürzungsfaktoren der inneren und äußeren Kanten bzw. Konturen vermieden werden kann.

Gemäß einem weiteren Aspekt der Erfindung wird eine Blechfolie für einen Katalysator-Trägerkörper mit einem Loch im Inneren vorgeschlagen, welche eine das Loch begrenzende Innenkontur und eine gekrümmte Außenkontur hat. Weiterhin weist die Blechfolie eine Struktur mit etwa in Richtung eines Radius verlaufenden Ausprägungen auf, wobei diese Blechfolie einstückig und nahtlos ist. Die Blechfolie weist hierzu in einem inneren Randbereich und einem äußeren Randbereich etwa einen einheitlichen Umformgrad auf. Die nahtlose Ausgestaltung der Blechfolie wird mit Hilfe eines einstückigen, ringförmigen Rohlings hergestellt. Auf diese Weise werden Fügestellen der Blechfolie vermieden, welche im Hinblick auf eine thermische Beanspruchung zu einer inhomogenen Spannungsverteilung in der Blechfolie führen würde. Dies ist von besonderer Bedeutung, wenn die Blechfolie in einem Katalysator-Trägerkörper eingesetzt wird, der in einem Abgassystem eines Automobils eingebaut ist. Dort treten sehr hohe thermische und dynamische Belastungen auf, wobei insbesondere ein gleichmäßiges thermisches Ausdehnungsverhalten der Blechfolien wünschenswert ist.

Gemäß einer weiteren Ausgestaltung der Blechfolie sind die Ausprägungen der Struktur radial verlaufende Wellenberge und Wellentäler mit einer Wellhöhe und einer Wellenlänge. Die Wellenhöhe ist dabei vorzugsweise in radialer Richtung konstant, während die Wellenlänge zunimmt. Alternativ dazu wird vorgeschlagen, dass die Anzahl der Wellenberge und Wellentäler in einem inneren Randbereich größer ist als in einem äußeren Randbereich. Diese besonderen Ausführungsformen der Blechfolie erlauben eine relativ gleichmäßige Umformung der Blechfolie, wobei ein Fließen des Werkstoffs der Blechfolie im wesentlichen vermieden werden kann.

Besonders bevorzugt sind Blechfolien mit einer Foliendicke kleiner als 0,065 mm, insbesondere zwischen 0,015 mm und 0,03 mm. Derartige Blechfolien haben eine relativ geringe oberflächenspezifische Wärmekapazität, so dass diese gerade als Katalysator-Trägerkörper besonders gut geeignet sind. Die Blechfolien müssen sicherstellen, dass nach dem Start der Verbrennungskraftmaschine möglichst schnell eine ausreichend hohe Temperatur der katalytisch aktiven Oberfläche erreicht und mit der katalytischen Reaktion begonnen wird.

Gemäß noch einer weiteren Ausgestaltung der Blechfolie ist die Struktur mit einer Mikrostruktur ausgeführt. Die Mikrostruktur dient beispielsweise der Versteifung der Struktur oder zur Verwirbelung eines Gasstromes, wenn diese Blechfolien für einen Katalystor-Trägerkörper eingesetzt werden. Die Mikrostruktur weist insbesondere eine Strukturhöhe auf, die ca. um den Faktor 0,05 bis 0,2 kleiner als die Wellhöhe der Struktur ist. Im Hinblick auf die Verwirbelung des Abgases ist es besonders vorteilhaft, wenn die Mikrostruktur in einem Winkel zur Ausrichtung der Ausprägungen der Struktur verläuft.

Gemäß noch einer weiteren Ausgestaltung der Blechfolie ist diese im wesentlichen eben. Dies gewährleistet unter fertigungstechnischen Gesichtspunkten eine besonders einfache Handhabung und gegebenenfalls einen sehr kompakten Katalysator-Trägerkörper.

Gemäß einem weiteren Aspekt der Erfindung wird ein Wabenkörper insbesondere zur Reinigung eines Abgases einer Verbrennungskraftmaschine vorgeschlagen, der einen Zentralkanal mit einer Anströmachse und eine Vielzahl von Blechfolien aufweist, wobei die Blechfolien zumindest teilweise strukturiert sind und für ein Abgas durchströmbare Kanäle bilden. Der Wabenkörper zeichnet sich dadurch aus, dass die Blechfolien einstückig und nahtlos sind, wobei die Blechfolien im wesentlichen jeweils parallel zu einer Ebene, vorzugsweise senkrecht zur Anströmachse, angeordnet sind und die Ausprägungen der Struktur etwa in Richtung eines Radius der Blechfolie verlaufen. Die Blechfolien sind insbesondere mit dem vorgeschlagenen Verfahren hergestellt worden und weisen demnach vorzugsweise keine Fügestelle auf. Die einstückigen Blechfolien vereinfachen die Fertigung von Katalysator-Trägerkörpern, wobei sich diese durch einen besonders niedrigen Druckabfall aufgrund der radial verlaufenden Ausprägungen der Struktur auszeichnen.

Gemäß einer weiteren Ausgestaltung des Wabenkörpers sind zwischen den Blechfolien glatte, ringförmige Blechscheiben angeordnet, die vorzugsweise Erhebungen und/oder Öffnungen aufweisen. Die Erhebungen und/oder Öffnungen können zusätzlich auf bzw. in den Blechfolien angeordnet sein. Diese Erhebungen und/oder Öffnungen dienen beispielsweise der Verwirbelung eines den Wabenkörper durchströmenden Abgases sowie dem Austausch von Teilgasströmen benachbarter Kanäle. Auf diese Weise kann die katalytische Aktivität des Wabenkörpers deutlich verbessert werden.

Gemäß einer weiteren Ausgestaltung beträgt die Kanaldichte nahe des Zentralkanals größer als 600 cpsi ("cells per square inch"), vorzugsweise größer 800 cpsi, insbesondere größer 1000 cpsi. Die Kanaldichte bezieht sich dabei auf ein imaginäres Flächenelement, welches um den Zentralkanal angeordnet ist. Weisen die Blechfolien eine konstante Wellhöhe in radialer Richtung auf, so ändert sich bei gleichbleibender Kanalanzahl die Wellenlänge in radialer Richtung. Dies hat beispielsweise zur Folge, dass die Kanaldichte in dem äußeren Randbereich ca. 286 cpsi beträgt, während im Inneren eine Kanaldichte von 1000 cpsi vorliegt.

Weitere vorteilhafte Ausgestaltungen und besonders bevorzugte Ausführungsformen der Erfindung werden anhand der folgenden Zeichnungen näher erläutert. Dabei zeigen:

Fig. 1    Schematisch und perspektivisch einen Rohling sowie eine Blechfolie,

Fig. 2    eine Teilansicht einer Ausführungsform der Blechfolie,

Fig. 3    schematisch und perspektivisch eine Ausführungsform des erfindungsgemäßen Wabenkörpers und

Fig. 4    eine Detailansicht einer weiteren Ausführungsform der Blechfolie.

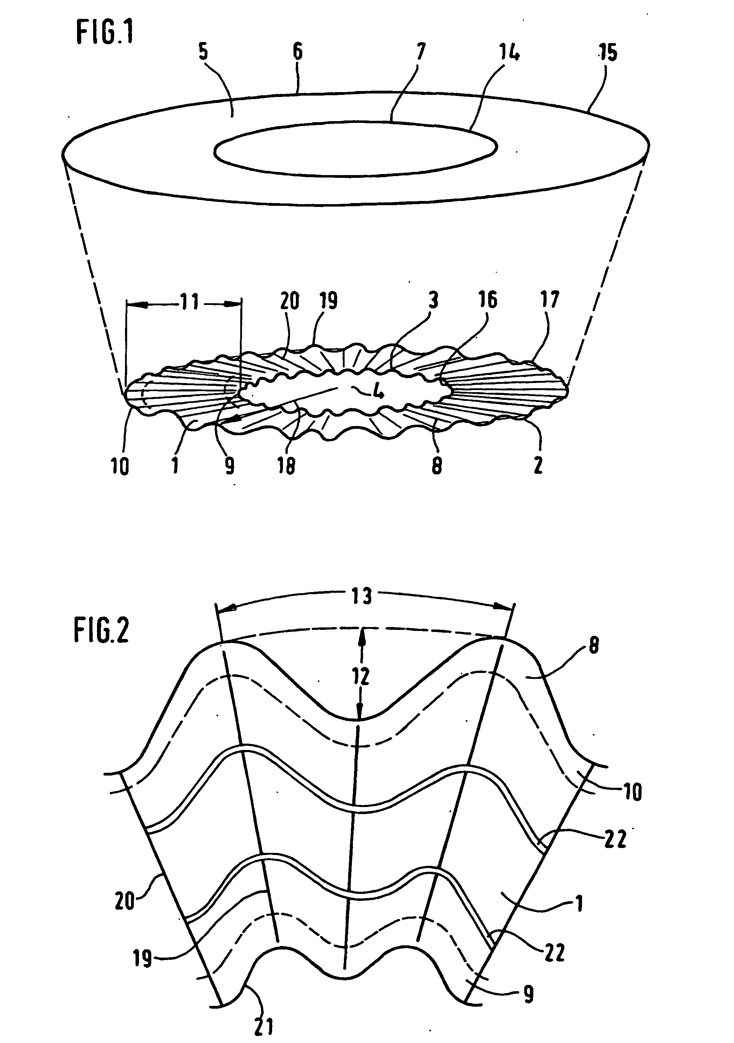

Fig. 1 zeigt schematisch und perspektivisch einen Rohling 5, der mit Hilfe des vorgeschlagenen Verfahrens zu einer ersten Ausführungsform der erfindungsgemäßen Blechfolie 1 mit einem Loch 4 im Inneren sowie einer vorgebbaren gekrümmten Außenkontur 2 und einer das Loch 4 begrenzende Innenkontur 3 umgeformt wird. Dabei wird zunächst der dargestellte glatter Rohling 5 gefertigt, dessen Außenkante 6 im wesentlichen konzentrisch außerhalb zu der vorgebbaren Außenkontur 2 der herzustellenden Blechfolie 1 und dessen Innenkante 7 im wesentlichen konzentrisch außerhalb zu der vorgebbaren Innenkontur 3 der herzustellenden Blechfolie 1 angeordnet ist. Anschließend wird eine Struktur 8 in die Blechfolie 1 geprägt, die vorzugsweise im wesentlichen radial verlaufende Ausprägungen aufweist, wobei die Blechfolie 1 in einem inneren Randbereich 9 und einem äußeren Randbereich 10 mit einem etwa einheitlichen Umformgrad bearbeitet wird. Während dieser Umformung wird vorzugsweise der Abstand 11 konstant gehalten. Dabei sind ein erster Umfang 14 der Innenkante 7 sowie ein zweiter Umfang 15 der Außenkante 6 des Rohlings 5 jeweils um einen Verkürzungsfaktor größer als ein dritter Umfang 16 der Innenkontur 3 und ein vierter Umfang 17 der Außenkontur 2, wobei die Verkürzungsfaktoren in Abhängigkeit der herzustellenden Struktur 8 ausgewählt werden. Bei einer wellenförmigen Struktur liegen diese zwischen 1,1 und 1,6. Sowohl der Rohling 5 als auch die Blechfolie 1 sind einstückig und weisen keine Fügestellen auf.

Fig. 2 zeigt schematisch eine Detailansicht einer Ausführungsform der Blechfolie 1 mit einer wellenförmigen Struktur 8. Die Ausprägungen der Struktur 8 sind dabei radial verlaufende Wellenberge 19 und Wellentäler 20 mit einer Wellhöhe 12 und Wellenlänge 13.

Die dargestellte Ausführungsform der Blechfolie 1 weist in Richtung des Radius 18 eine konstante Wellhöhe 12 auf, während die Wellenlänge 13 zunimmt. Das Verhältnis von Wellenlänge 13 zu Wellenhöhe 12 in einem äußeren Randbereich 10 ist dabei mindestens um einen Verhältnisfaktor von 0,3 kleiner als das entsprechende Verhältnis in einem inneren Randbereich 9. Die Blechfolie 1 ist mit einer Foliendicke 21 kleiner als 0,05 mm ausgeführt, wobei die Struktur 8 von einer Mikrostruktur 22 gekreuzt wird.

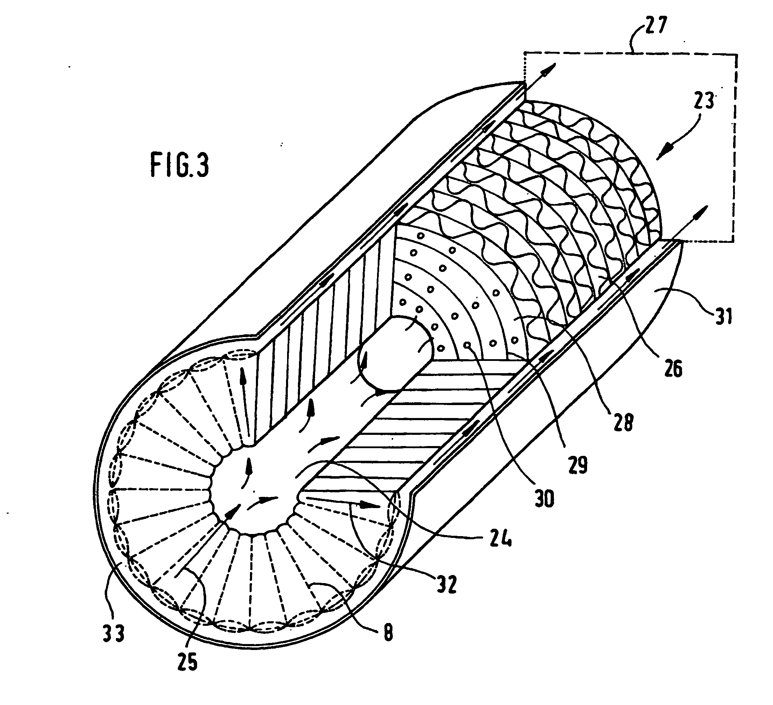

Fig. 3 zeigt schematisch und perspektivisch einen Wabenkörper, der insbesondere zur Reinigung eines Abgases einer Verbrennungskraftmaschine geeignet ist. Der Wabenkörper 23 umfasst einen Zentralkanal 24 mit einer Anströmachse 25 und einer Vielzahl von Blechfolien 1, die zumindest teilweise so strukturiert sind, dass diese für ein Abgas durchströmbare Kanäle 26 bilden. Die Blechfolien 1 sind dabei einstückig und im wesentlichen jeweils parallel zu einer Ebene 27, vorzugsweise senkrecht zur Anströmachse 25, angeordnet. Sie weisen eine Struktur 8 auf, deren Ausprägungen 19 und 20 etwa in Richtung eines Radius 18 verlaufen. Der Wabenkörper 23 ist von einem Gehäuse 31 umgeben, das im wesentlichen die Strömungswege (angedeutet durch die Pfeile) begrenzt.

Zwischen den Blechfolien 1 sind glatte, ringförmige Blechscheiben 28 angeordnet, die Erhebungen 29 und Öffnungen 30 aufweisen. Vorzugsweise weisen auch die Blechfolien 1 derartige Öffnungen 30 und/oder Erhebungen 29 bzw. Mikrostrukturen 22 auf. Die Erhebungen 29 sind hier beispielsweise als eine umlaufende Mikrostruktur 22 ausgebildet. Benachbarte Blechfolien 1 und Blechscheiben 28 begrenzen dabei Kanäle 26. Die Oberfläche der Kanäle 26 kann beispielsweise mit einer katalytisch aktiven Beschichtung versehen werden und somit zur Umsetzung von Schadstoffen im Abgas dienen. Das zu reinigende Abgas strömt dabei parallel zur Anströmachse 25 in den Zentralkanal 24, und anschließend durch eine Vielzahl von Kanälen 26 radial auswärts in Strömungsrichtung 32 bis in eine Ringspalte 33, von dem es weiter zu einem Auslass (nicht dargestellt) strömt. Die Kanaldichte beträgt dabei nahe des Zentralkanals 24 mindestens 800 cpsi. Der dargestellte Wabenkörper 23 zeichnet sich durch einen extrem niedrigen Druckverlust im Abgasstrom aus.

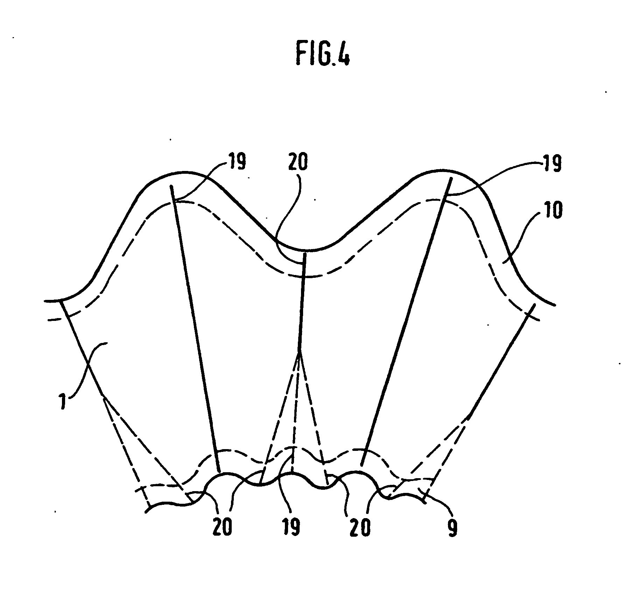

Fig. 4 zeigt schematisch und in einer Detailansicht eine weitere Ausführungsform der Blechfolie 1. Diese zeichnet sich dadurch aus, dass die Anzahl der Wellenberge 19 und Wellentäler 20 in einem inneren Randbereich 9 größer als in einem äußeren Randbereich 10 ist. Mit Hilfe eines entsprechend ausgestalteten Wellwerkzeuges wird in einem Wellental 20 ein zusätzlicher Wellenberg 19 generiert, so dass zwischen zwei Wellenbergen 19 in dem inneren Randbereich 9 radial einwärts ein zusätzlicher Wellenberg 19 hergestellt wird.

Mit Hilfe des erfindungsgemäßen Verfahrens sowie der erfindungsgemäßen Blechfolie können Wabenkörper, insbesondere als Katalysator-Trägerkörper hergestellt werden, die unter fertigungstechnischen Gesichtspunkten besonders einfach herstellbar sind und sich durch einen sehr niedrigen Druckabfall auszeichnen.

**Bezugszeichenliste**

1 Blechfolie
2 Außenkontur
3 Innenkontur
4 Loch
5 Rohling
6 Außenkante
7 Innenkante.
8 Struktur
9 innerer Randbereich
10 äußerer Randbereich
11 Abstand
12 Wellhöhe
13 Wellenlänge
14 erster Umfang
15 zweiter Umfang
16 dritter Umfang
17 vierter Umfang
18 Radius
19 Wellenberg
20 Wellental
21 Foliendicke
22 Mikrostruktur
23 Wabenkörper
24 Zentralkanal
25 Anströmachse
26 Kanal
27 Ebene
28 Blechscheibe
29 Erhebung
30 Öffnung
31 Gehäuse
32 Strömungsrichtung
33 Ringspalt

**Patentansprüche**

1. Verfahren zur Herstellung einer einstückigen, strukturierten Blechfolie (1) mit einem Loch (4) im Inneren, welche eine gekrümmte Außenkontur (2) und eine das Loch (4) begrenzende Innenkontur (3) aufweist, bei dem zunächst ein einstückiger, ringförmiger, glatter Rohling (5) hergestellt wird, dessen Außenkante (6) im wesentlichen konzentrisch außerhalb zu der zu erzeugenden Außenkontur (2) und dessen Innenkante (7) im wesentlichen konzentrisch außerhalb zu der zu erzeugenden Innenkontur (3) angeordnet ist, und anschließend eine Struktur (8) in die Blechfolie (1) geprägt wird, die radial verlaufende Ausprägungen (19, 20) aufweist, wobei die Blechfolie (1) in einem inneren Randbereich (9) und einem äußeren Randbereich (10) mit einem etwa einheitlichen Umformgrad bearbeitet wird.

2. Verfahren nach Anspruch 1, bei dem die Struktur (8) so geprägt wird, dass ein Abstand (11) von Innenkante (7) zu Außenkante (6) des Rohlings (5), dem Abstand (11) der Außenkontur (2) zur Innenkontur (3) der Blechfolie (1) entspricht.

3. Verfahren nach Anspruch 1 oder 2, bei dem eine wellenförmige Struktur (8) eingeprägt wird, die eine Wellenhöhe (12) und eine Wellenlänge (13) aufweist.

4. Verfahren nach Anspruch 3, bei dem die Struktur (8) im inneren (9) und im äußeren Randbereich (10) eine gleich große Wellenhöhe (12) aufweist, wobei die Wellenlänge (13) im inneren Randbereich (9) kleiner ist als im äußeren (10).

5. Verfahren nach einem der Ansprüche 1 bis 4, bei dem die Innenkontur (3) und Außenkontur (2) sowie die Innenkante (7) und Außenkante (6) rund und konzentrisch zueinander ausgeführt sind.

6. Verfahren nach einem der Ansprüche 1 bis 5, bei dem die Struktur (4) mit Hilfe eines Mehrstufenwerkzeuges, insbesondere mit einem mehrstufigen Wellwerkzeug, erzeugt wird, wobei jeweils nur eine teilweise Herstellung der Struktur (4) erfolgt.

7. Verfahren nach einem der Ansprüche 1 bis 6, bei dem ein erster Umfang (14) der Innenkante (7) sowie ein zweiter Umfang (15) der Außenkante (6) des Rohlings (5) jeweils um einen Verkürzungsfaktor größer als ein dritter Umfang (16) der Innenkontur (3) und ein vierter Umfang (17) der Außenkontur (2) ausgeführt sind, welcher in Abhängigkeit der herzustellenden Struktur (8) ausgewählt wird.

8. Verfahren nach Anspruch 7, wobei die Struktur (8) wellenförmig mit einer Wellenhöhe (12) und einer Wellenlänge (13) ausgeführt wird, bei dem der Verkürzungsfaktor 1,1 bis 1,6, insbesondere 1,25 bis 1,45, beträgt.

9. Blechfolie (1) für einen Katalysator-Trägerkörper mit einem Loch (4) um Inneren, welche eine das Loch (4) begrenzende Innenkontur (3) und eine gekrümmte Außenkontur (2) hat, und die eine Struktur (8) mit in Richtung eines Radius (18) verlaufenden Ausprägungen (19, 20) aufweist, **dadurch gekennzeichnet, dass** diese Blechfolie (1) einstückig und nahtlos ist.

**10.** Blechfolie (1) nach Anspruch 9, **dadurch gekennzeichnet, dass** die Ausprägungen der Struktur (8) radial verlaufende Wellenberge (19) und Wellentäler (20) mit einer Wellhöhe (12) und einer Wellenlänge (13) sind.

**11.** Blechfolie (1) nach Anspruch 9 oder 10, **dadurch gekennzeichnet, dass** die Wellenhöhe (12) in radialer Richtung konstant ist, während die Wellenlänge (13) zunimmt.

**12.** Blechfolie (1) nach Anspruch 9 oder 10, **dadurch gekennzeichnet, dass** die Anzahl der Wellenberge (19) und Wellentäler (20) in einem inneren Randbereich (9) größer ist als in einem äußeren Randbereich (10).

**13.** Blechfolie (1) nach einem der Ansprüche 9 bis 12, **dadurch gekennzeichnet, dass** diese eine Foliendicke (21) kleiner als 0,065 mm aufweist, vorzugsweise zwischen 0,015 mm und 0,03 mm.

**14.** Blechfolie (1) nach einem der Ansprüche 9 bis 13, **dadurch gekennzeichnet, dass** die Struktur (8) mit einer Mikrostruktur (22) ausgeführt ist.

**15.** Blechfolie (1) nach einem der Ansprüche 9 bis 14, **dadurch gekennzeichnet, dass** die Blechfolie (1) im wesentlichen eben ist.

**16.** Wabenkörper (23), insbesondere zur Reinigung eines Abgases einer Verbrennungskraftmaschine, umfassend einen Zentralkanal (24) mit einer Anströmachse (25) und eine Vielzahl von Blechfolien (1), die zumindest teilweise strukturiert sind und für ein Abgas durchströmbare Kanäle (26) bilden, **dadurch gekennzeichnet, dass** die Blechfolien (1) einstückig und nahtlos sind, wobei die Blechfolien (1) im wesentlichen jeweils parallel zu einer Ebene (27), vorzugsweise senkrecht zur Anströmachse (25), angeordnet sind und Ausprägungen (19, 20) der Struktur (8) in Richtung eines Radius (18) der Blechfolie (1) verlaufen.

**17.** Wabenkörper (23) nach Ansprach 16, **dadurch gekennzeichnet, dass** zwischen den Blechfolien (1) glatte, ringförmige Blechscheiben (28) angeordnet sind, die vorzugsweise Erhebungen (29) und/oder Öffnungen (30) aufweisen.

**18.** Wabenkörper (23) nach Anspruch 16 oder 17, **dadurch gekennzeichnet, dass** die Kanaldichte nahe des Zentralkanals (24) größer als 600 cpsi beträgt, vorzugsweise größer 800 cpsi, insbesondere größer 1000 cpsi.

**Claims**

**1.** A process for manufacturing a one-piece, structured metal foil (1) having an interior hole (4) with a curved outer contour (2) and an inner contour (3) delimiting the hole (4), wherein initially a one-piece annular shaped smooth blank (5) the outer edge (6) of which is disposed substantially concentrically outside the outer contour (2) to be produced and the inner edge (7) of which is disposed substantially concentrically outside the inner contour (3) to be produced, and subsequently imparting a structure (8) to the metal foil (1) which comprises formations (19, 20) extending radially, wherein the metal foil (1) is formed in an inner boundary region (9) and an outer boundary region (10) with an approximately uniform degree of deformation.

**2.** Process according to claim 1, in which the structure (8) is stamped such, that a distance (11) from the inner edge (7) to the outer edge (6) of the blank (5) approximately corresponds to a distance (11) of the outer contour (2) to the inner contour (3) of the metal foil (1).

**3.** Process according to claim 1 or 2, in which a wave form structure (8) is stamped in which has a wave height (12) and a wave length (13).

**4.** Process according to claim 3, in which the structure (8) in the inner (9) and the outer boundary region (10) comprises a similar wave height (12), wherein the wave height (13) in the inner boundary region (9) is smaller than in the outer boundary region (10).

**5.** Process according to one of claims 1 to 4, in which the inner contour (3) and the outer contour (2) as well as the inner edge (7) and the outer edge (6) are formed round and mutually concentric.

**6.** Process according to one of claims 1 to 5, in which the structure (4) is formed by use of a multistage tool, in particular with a multistage wave stamping tool, wherein the structure (4) is respectively formed only in part.

**7.** Process according to one of claims 1 to 6, in which a first periphery (14) of the inner edge (7) as well as a second periphery (15) of the outer edge (6) of the blank (5) are respectively larger by a shortening factor as a third periphery (16) of the inner contour (3) and a fourth periphery (17) of the outer contour (2), said shortening factor being chosen depending on the structure (8) to be produced.

**8.** Process according to claim 7, wherein the structure (8) is formed wave shaped with a wave height (12) and à wave length (13), in which the shortening factor is between 1.1 to 1.6, in particular 1.25 to 1.45.

9. A metal foil (1) for a catalyst carrier body comprising an interior hole (4) which comprises an inner contour (3) delimiting said hole (4) and a curved outer contour (2), which comprises further a structure (8) with formations (19, 20) extending in direction of a radius (18), **characterized in that** the metal foil (1) is a one-piece and seamless metal foil (1).

10. A metal foil according to claim 9, **characterized in that** the formations of the structure (8) are radially extending wave peaks (19) and wave valleys (20) with a wave height (12) and a wave length (13).

11. Metal foil according to claim 9 or 10, **characterized in that** the wave height (12) is constant in a radial direction, whereas the wave length (13) increases.

12. Metal foil (1) according to claim 9 or 10, **characterized in that** the number of wave peaks (19) and wave valleys (20) in an inner boundary region (9) is larger than in an outer boundary region (10).

13. Metal foil (1) according to one of claims 9 to 12, **characterized in that** said metal foil has a foil thickness (21) smaller than 0.065 mm, in particular in between 0.015 mm and 0.03 mm.

14. Metal foil (1) according to one of claims 9 to 13, **characterized in that** the structure (8) is formed with a microstructure (22).

15. Metal foil (1) according to one of claims 9 to 14, **characterized in that** the metal foil (1) is substantially planar.

16. A honeycomb body (23) in particular for cleaning an exhaust of an internal combustion engine, comprising a central passage (24) having an incoming flow axis (25) and a multiplicity of metal foils (1) which are at least in part structured and form passages through which an exhaust gas can flow, **characterized in that** the metal foils (1) are one-piece and seamless metal foils, wherein the metal foils (1) are substantially parallel to a respective plane (27), in particular perpendicular to the incoming flow axis (25) and wherein formations (19, 20) of the structure (8) extend in direction of a radius (18) of a metal foil (1).

17. Honeycomb body (23) according to claim 16, **characterized in that** between the metal foils (1) metal foil discs (28) being smooth and annular shaped are disposed, which comprise in particular elevations (29) and/or openings (30).

18. Honeycomb body (23) according to claim 16 or 19, **characterized in that** the passage density close to the central passage (24) is greater than 600 cpsi, in particular greater than 800 cpsi, in particular greater than 1.000 cpsi.

## Revendications

1. Procédé pour fabriquer une feuille de tôle structurée (1) en une pièce, avec un trou (4) à l'intérieur, laquelle a un contour extérieur incurvé (2) et un contour intérieur (3) délimitant le trou (4), procédé dans lequel une pièce brute en une pièce, lisse et annulaire (5) est d'abord fabriquée dont l'arête extérieure (6) est agencée sensiblement de manière concentrique à l'extérieur du contour extérieur (2) devant être généré et dont l'arête intérieure (7) est agencée sensiblement de manière concentrique à l'extérieur du contour intérieur (3) devant être généré, et ensuite une structure (8) est introduite dans la feuille de tôle (1) qui présente des formations (19, 20) s'étendant de manière radiale, dans quel cas la feuille de tôle (1) est formée dans une région de bord intérieure (9) et dans une région de bord extérieure (10) avec un degré de déformation approximativement uniforme.

2. Procédé selon la revendication 1, dans lequel la structure (8) est estampée de manière telle qu'une distance (11) depuis l'arête intérieure (7) jusqu'à l'arête extérieure (6) de la pièce brute (5) correspond à la distance (11) depuis le contour extérieur (2) jusqu'au contour intérieur (3) de la feuille de tôle (1).

3. Procédé selon la revendication 1 ou 2, dans lequel une structure en forme d'ondes (8) est estampée, qui a une hauteur d'onde (12) et une longueur d'onde (13).

4. Procédé selon la revendication 3, dans lequel la structure 8 dans la région de bord intérieure (9) et dans la région de bord extérieure (10) comprend une hauteur d'onde (12) similaire, dans quel cas la longueur d'onde (13) est plus petite dans la région de bord intérieure (9) que dans la région de bord extérieure (10).

5. Procédé selon l'une des revendications 1 à 4, dans lequel le contour intérieur (3) et le contour extérieur (2) ainsi que l'arête intérieure (7) et l'arête extérieure (6) sont réalisés mutuellement de manière circulaire et concentrique.

6. Procédé selon l'une des revendications 1 à 5, dans lequel la structure (4) est créée à l'aide d'un outil à plusieurs étages, notamment avec un outil à onduler à plusieurs étages, dans quel cas la structure (4) n'est respectivement formée que partiellement.

**7.** Procédé selon l'une des revendications 1 à 6, dans lequel une première circonférence (14) de l'arête intérieure (7) ainsi qu'une deuxième circonférence (15) de l'arête extérieure (6) de la pièce brute (5) sont réalisées respectivement d'un facteur de raccourcissement plus grand qu'une troisième circonférence (16) du contour intérieur (3) et une quatrième circonférence (17) du contour (2), le facteur de raccourcissement étant choisi en fonction de la structure (8) devant être fabriquée.

**8.** Procédé selon la revendication 7, dans lequel la structure (8) est réalisée en forme d'onde avec une hauteur d'onde (12) et une longueur d'onde (13), dans lequel le facteur de raccourcissement est entre 1,1 à 1,6, en particulier 1,25 à 1,45.

**9.** Feuille de tôle (1) pour un corps support de catalyseur comprenant un trou (4) à l'intérieur, laquelle a un contour intérieur (3) délimitant le trou (4) et un contour extérieur incurvé (2) et qui a une structure (8) avec des formations (19, 20) s'étendant en direction d'un rayon (18), **caractérisée en ce que** cette feuille de tôle (1) se présente en une pièce et sans joint.

**10.** Feuille de tôle (1) selon la revendication 9, **caractérisée en ce que** les formations de la structure (8) sont des crêtes d'ondes (19) et des creux d'ondes (20) s'étendant de manière radiale avec une hauteur d'onde (12) et une longueur d'onde (13).

**11.** Feuille de tôle (1) selon la revendication 9 ou 10, **caractérisée en ce que** la hauteur d'onde (12) est constante en direction radiale, tandis que la longueur d'onde (13) augmente.

**12.** Feuille de tôle (1) selon la revendication 9 ou 10, **caractérisée en ce que** le nombre de crêtes d'ondes (19) et de creux d'ondes (20) est plus élevé dans une région de bord intérieure (9) que dans une région de bord extérieure (10).

**13.** Feuille de tôle (1) selon l'une des revendications 9 à 12, **caractérisée en ce que** celle-ci a une épaisseur de feuille (21) plus petite que 0,065 mm, de préférence entre 0,015 mm et 0,03 mm.

**14.** Feuille de tôle (1) selon l'une des revendications 9 à 13, **caractérisée en ce que** la structure (8) est formée avec une microstructure (22).

**15.** Feuille de tôle (1) selon l'une des revendications 9 à 14, **caractérisée en ce que** la feuille de tôle (1) est sensiblement plane.

**16.** Corps en nids d'abeilles (23), notamment pour épurer un gaz d'échappement d'une machine à combustion interne, comprenant un canal central (24) avec un axe d'arrivée de flux (25) et une multiplicité de feuilles de tôle (1) qui sont au moins partiellement structurées et qui forment des canaux (26) pouvant être traversés par un gaz d'échappement, **caractérisé en ce que** les feuilles de tôle (1) sont en une pièce et sans joint, dans quel cas les feuilles de tôle (1) sont agencées sensiblement de façon parallèle par rapport à un plan respectif (27), de préférence de façon perpendiculaire par rapport à l'axe d'arrivée de flux (25) et dans quel cas des formations (19, 20) de la structure (8) s'étendent en direction d'un rayon de la feuille de tôle (1).

**17.** Corps en nids d'abeilles (23) selon la revendication 16, **caractérisé en ce qu'**entre les feuilles de tôle (1) des disques en métal (28) lisses et annulaires sont agencés, qui ont de préférence des élévations (29) et/ou des ouvertures (30).

**18.** Corps en nids d'abeilles (23) selon la revendication 16 ou 17, **caractérisé en ce que** la densité de canal à proximité du canal central (24) est plus grande que 600 cpsi, de préférence plus grande que 800 cpsi, en particulier plus grande que 1000 cpsi.

FIG.1

FIG.2

FIG.3

# FIG.4